# FASCICULE DE BREVET EUROPEEN

(11) **EP 3 336 985 B1**
(45) Date de publication et mention de la délivrance du brevet: **04.03.2020**
(21) Numéro de dépôt: 17205074.2
(22) Date de dépôt: 04.12.2017
(51) Int. Cl.: H02G 1/00, H01B 13/012, B26D 7/28

(54) **PROCEDE ET MACHINE DE FABRICATION DE FRETTES**
VERFAHREN UND MASCHINE ZUR HERSTELLUNG VON STÜTZRINGEN
METHOD AND MACHINE FOR MANUFACTURING RINGS

(30) Priorité: 13.12.2016 FR 1662348
(43) Date de publication de la demande: 20.06.2018
(73) Titulaire: Airbus Operations S.A.S., 31060 Toulouse (FR)
(72) Inventeur: DOMINGUEZ, Alain, 31100 TOULOUSE (FR)
(74) Mandataire: Sarraméa, Claude

(56) Documents cités:
- BR-A- 8 207 143
- FR-A1- 2 371 277
- TW-B- 208 109

## Description

L'invention est relative au domaine de la fabrication de faisceaux de câbles, en particulier les faisceaux de câbles équipant les aéronefs. Les aéronefs, en particulier les avions de transport, comportent un ensemble de câbles électriques circulant dans leur structure. Ces câbles électriques sont regroupés dans des faisceaux de câbles correspondant chacun à un ensemble de câbles. Les différents câbles d'un faisceau de câbles sont attachés ensemble au moyen de liens usuellement appelés « frettes ». Ces frettes sont mises en place par des opérateurs : un opérateur dispose d'une bobine de frette dans laquelle il coupe des frettes de longueur adaptée au diamètre du faisceau de câbles qu'il souhaite attacher. Des frettes d'une longueur sensiblement égale à 75cm sont par exemple utilisées de façon usuelle pour produire des faisceaux de câbles équipant les aéronefs. La découpe des frettes dans une bobine de frette est une opération longue et fastidieuse, nécessitant de nombreuses heures de travail pour un opérateur. Par conséquent, il serait opportun de pouvoir produire les frettes plus rapidement.

Le document FR 2 371 277 A1 divulgue un procédé de fabrication de frettes comprenant une étape de mise en place d'au moins une bobine de frette sur une machine comprenant une bobine d'enroulement conformée pour être entraînée en rotation autour d'un axe de rotation et comportant un dispositif de maintien conformé pour permettre d'attacher une extrémité d'une frette.

### EXPOSE DE L'INVENTION :

La présente invention a notamment pour but d'apporter une solution à ce problème. Elle concerne un procédé de fabrication de frettes. Ce procédé est remarquable en ce qu'il comprend les étapes suivantes :
- mettre en place au moins une bobine de frette sur une machine comprenant :
   - une bobine d'enroulement conformée pour être entraînée en rotation autour d'un axe de rotation et comportant :
      - un dispositif de maintien conformé pour permettre d'attacher une extrémité d'une frette ;
      - une encoche s'étendant radialement par rapport à la bobine d'enroulement,
   - un moteur électrique couplé à la bobine d'enroulement et susceptible d'entraîner la bobine d'enroulement en rotation autour de son axe lorsqu'il est alimenté électriquement ;
   - au moins un axe susceptible de recevoir une bobine de frette,
- maintenir une extrémité libre de la frette de la bobine de frette, sur la bobine d'enroulement, au moyen du dispositif de maintien de la bobine d'enroulement ;
- alimenter électriquement le moteur électrique de la machine pour entraîner en rotation la bobine d'enroulement, de façon à enrouler la frette de la bobine de frette sur plusieurs tours autour de la bobine d'enroulement ;
- arrêter d'alimenter électriquement le moteur électrique de la machine ;
- au niveau de l'encoche de la bobine d'enroulement, couper lesdits plusieurs tours de frette enroulés sur la bobine d'enroulement.

Ainsi, en choisissant une bobine d'enroulement ayant un périmètre correspondant à la longueur des frettes à produire, le procédé permet de produire un ensemble de frettes en ne requérant qu'un nombre réduit d'opérations manuelles de la part d'un l'opérateur. Une seule étape de découpe est nécessaire pour couper lesdits plusieurs tours de frette enroulés sur la bobine d'enroulement et ainsi produire l'ensemble des frettes. De plus, l'étape d'enroulement de la frette sur la bobine d'enroulement est rapide étant donné que la rotation de la bobine d'enroulement est motorisée. L'ensemble des frettes découpées dans une bobine de frette peut ainsi être produit en seulement quelques minutes.

Dans un mode avantageux de réalisation, le procédé comporte l'étape suivante avant l'étape consistant à couper lesdits plusieurs tours de frette enroulés sur la bobine d'enroulement :
- au niveau de l'encoche de la bobine d'enroulement, mettre en place au moins un premier lien autour desdits plusieurs tours de frette enroulés sur la bobine d'enroulement.

Avantageusement encore, le procédé comporte en outre l'étape suivante avant l'étape consistant à couper lesdits plusieurs tours de frette enroulés sur la bobine d'enroulement :
- au niveau de l'encoche de la bobine d'enroulement, mettre en place au moins un deuxième lien, distant du premier lien, autour desdits plusieurs tours de frette enroulés sur la bobine d'enroulement,
   et, lors de l'étape consistant à couper lesdits plusieurs tours de frette enroulés sur la bobine d'enroulement, couper lesdits plusieurs tours de frette entre le premier lien et le deuxième lien.

L'invention est également relative à une machine de fabrication de frettes. Cette machine est remarquable en ce qu'elle comprend :
- au moins un axe susceptible de recevoir une bobine de frette ;
- une bobine d'enroulement conformée pour être entraînée en rotation autour d'un axe de rotation et comportant :
   - un dispositif de maintien conformé pour permettre d'attacher une extrémité d'une frette sur la bobine d'enroulement ; et
   - une encoche s'étendant radialement par rapport à la bobine d'enroulement,
- un moteur électrique couplé à la bobine d'enroulement et susceptible d'entraîner la bobine d'enroulement en rotation autour de son axe lorsqu'il est alimenté électriquement, de façon à permettre d'enrouler la frette d'une bobine de frette sur plusieurs tours autour de la bobine d'enroulement lorsque la bobine de frette est mise en place sur l'axe susceptible de recevoir la bobine de frette et une extrémité libre de la frette de la bobine de frette est maintenue sur la bobine d'enroulement, au moyen du dispositif de maintien de la bobine d'enroulement,
l'encoche de la bobine d'enroulement étant conformée pour permettre le passage d'un outil de coupe pour couper lesdits plusieurs tours de frette enroulés sur la bobine d'enroulement.

Dans un mode particulier de réalisation, la machine comporte en outre un deuxième axe susceptible de recevoir une deuxième bobine de frette.

De façon avantageuse, l'encoche de la bobine d'enroulement est conformée pour permettre la mise en place d'un premier lien et d'un deuxième lien, distant du premier lien, autour desdits plusieurs tours de frette enroulés sur la bobine d'enroulement.

### DESCRIPTION DETAILLEE :

L'invention sera mieux comprise à la lecture de la description qui suit et à l'examen de la figure annexée.

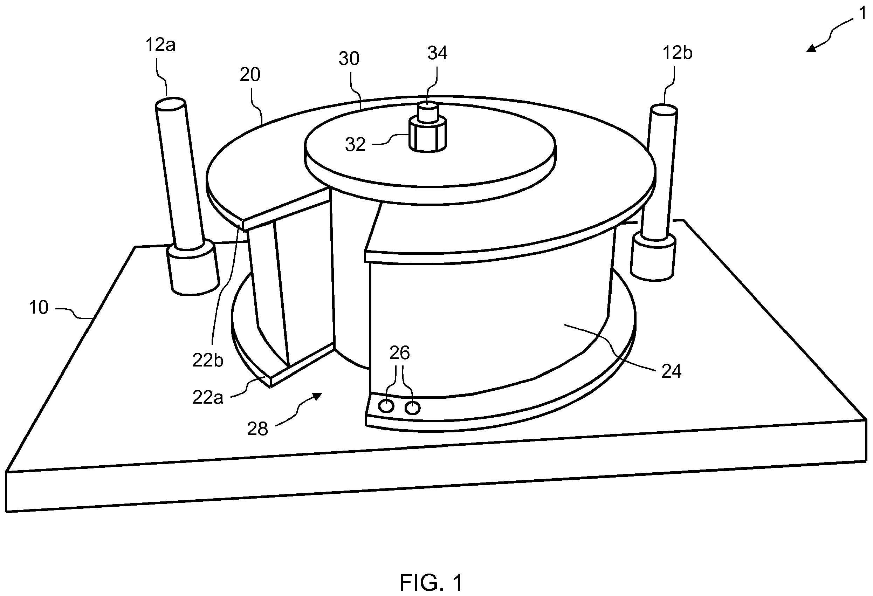

La figure 1 illustre de façon schématique une machine de fabrication de frettes conforme à un mode de réalisation de l'invention.

La machine 1 représentée sur la figure 1 comporte un châssis 10 sur lequel est disposée une bobine d'enroulement 20 et deux axes 12a, 12b susceptibles chacun de recevoir une bobine de frette. La bobine d'enroulement 20 est disposée de telle façon que son axe de rotation est perpendiculaire à une surface plane du châssis 10. La bobine d'enroulement 20 comporte une surface d'enroulement 24 délimitée par deux rebords 22a et 22b situés dans le prolongement respectivement d'une face inférieure et d'une face supérieure de la bobine d'enroulement. La notion de face inférieure et de face supérieure est considérée dans la position de la bobine d'enroulement telle que représentée sur la figure. Le périmètre de la surface d'enroulement 24 est choisi de façon à correspondre à la longueur souhaitée des frettes à fabriquer au moyen de la machine, par exemple 75cm. La machine comporte également un moteur électrique situé sous le châssis 10 et monté solidaire dudit châssis. Par conséquent, ce moteur n'est pas visible sur la figure. Un axe 34, susceptible d'être entraîné en rotation par le moteur, traverse axialement la bobine d'enroulement 20. La bobine d'enroulement 20 est montée solidaire de l'axe 34. Pour cela, un disque 30 traversé en son centre par l'axe 34, est placé sur la face supérieure de la bobine d'enroulement. Un autre disque, similaire au disque 30 mais non visible sur la figure, est placé sous la face inférieure de la bobine d'enroulement. Un écrou vissé sur l'axe 34 et placé sous cet autre disque permet un maintien vertical de cet autre disque de façon à le maintenir écarté du châssis 10. Un écrou 32 est vissé sur l'axe 34 de façon à serrer le disque 30 contre la face supérieure de la bobine d'enroulement. La bobine d'enroulement 20 est donc placée entre le disque 30 et l'autre disque. Elle est maintenue serrée entre ces deux disques, ce qui permet de la rendre solidaire de l'axe 34. Le rebord 22a de la bobine d'enroulement comporte deux trous traversants 26. La machine 1 comporte également un câble d'alimentation électrique du moteur et un interrupteur monté en série sur ce câble. La bobine d'enroulement 20 comporte une encoche 28 s'étendant radialement par rapport à ladite bobine d'enroulement.

Pour produire des frettes au moyen de la machine, selon un procédé conforme à un exemple de réalisation de l'invention, un opérateur met en place une bobine de frette sur chacun des axes 12a et 12b. Il saisit une extrémité libre de la frette de chacune des bobines de frette, il passe cette extrémité libre dans les trous 26 de la bobine d'enroulement 20 et il noue cette extrémité libre de façon à l'attacher à la bobine d'enroulement. Les trous 26 assurent ainsi un rôle de dispositif de maintien de la frette sur la bobine d'enroulement. Dans une variante de réalisation, ces trous 26 sont remplacés par un ergot fixé à l'un des rebords de la bobine d'enroulement et l'opérateur noue l'extrémité libre de la frette autour de l'ergot. L'opérateur ferme ensuite l'interrupteur, ce qui permet d'alimenter électriquement le moteur. Le moteur entraîne alors la bobine d'enroulement 20 en rotation autour de son axe de rotation. La frette de chacune des bobines étant attachée à la bobine d'enroulement, la frette se dévide de sa bobine et s'enroule sur la surface d'enroulement 24 du fait de la rotation de la bobine d'enroulement. Lorsque les bobines de frette sont vides, l'opérateur ouvre l'interrupteur, ce qui a pour effet d'arrêter le moteur et par conséquent la rotation de la bobine d'enroulement. La frette issue de chacune desdites bobines est ainsi enroulée sur plusieurs tours autour de la bobine d'enroulement 20. Au niveau de l'encoche 28 de la bobine d'enroulement, l'opérateur met en place un premier lien autour desdits plusieurs tours de frette enroulés sur la bobine d'enroulement. De façon avantageuse, il met également en place, au niveau de l'encoche 28 de la bobine d'enroulement, un deuxième lien autour desdits plusieurs tours de frette enroulés sur la bobine d'enroulement. Ce deuxième lien est disposé distant du premier lien, de façon à permettre le passage d'un outil de coupe entre le premier lien et le deuxième lien. L'outil de coupe correspond par exemple à des ciseaux ou à une pince coupante. L'opérateur passe alors un tel outil de coupe entre le premier lien et le deuxième lien, autour de l'ensemble des tours de frette enroulés sur la bobine d'enroulement, puis il coupe ces tours de frette. L'opérateur peut alors retirer ces tours de frette de la bobine d'enroulement. L'encoche 28 est conformée de telle façon que l'opérateur puisse mettre en place le premier lien et le deuxième lien autour de l'ensemble des tours de frette, ces deux liens étant suffisamment distants l'un de l'autre pour permettre le passage de l'outil de coupe entre ces deux liens. L'ensemble des tours de frette étant coupé au niveau de l'encoche 28 de la bobine d'enroulement, chaque tour de frette devient un morceau de frette, appelé frette dans la suite de la description, dont la longueur correspond sensiblement au périmètre de la surface d'enroulement 24 de la bobine d'enroulement. Le procédé conforme à l'invention permet donc de produire un nombre de frettes correspondant au nombre de tours de frette enroulés sur la bobine d'enroulement. En utilisant deux bobines de frettes disposées sur le premier axe 12a et sur le deuxième axe 12b, le procédé permet de produire environ 500 frettes d'une longueur d'environ 75cm chacune, en seulement quelques minutes. Selon d'autres modes de réalisation de l'invention, il est possible d'utiliser un nombre différent de bobines de frette, par exemple une seule bobine, trois bobines ou quatre bobines (en utilisant une machine comportant des axes susceptibles de recevoir ces bobines). Le nombre de frettes produites est alors modifié en fonction du nombre de bobines de frette utilisées.

Les frettes produites sont attachées ensemble à proximité d'une première extrémité par le premier lien et à proximité d'une deuxième extrémité par le deuxième lien puisque l'opérateur a coupé l'ensemble des tours de frette entre ces deux liens. Cela est avantageux pour le rangement de l'ensemble des frettes produites, en attendant leur utilisation. Dans une variante du procédé, l'opérateur met en place uniquement le premier lien avant de couper l'ensemble des tours de frette. Les frettes produites sont alors attachées ensemble uniquement par le premier lien à proximité de leur première extrémité. Dans une autre variante, l'opérateur ne met pas en place de lien avant de couper l'ensemble des tours de frette. Les frettes produites ne sont alors pas attachées ensemble.

Dans un mode particulier de réalisation, la vitesse de rotation de la bobine d'enroulement 20 est choisie dans un intervalle de 250 à 350 tr/mn.

## Revendications

1. Procédé de fabrication de frettes comprenant une étape de mise en place d'au moins une bobine de frette sur une machine (1) comprenant :
• au moins un axe (12a, 12b) susceptible de recevoir une bobine de frette ; et
• une bobine d'enroulement (20) conformée pour être entraînée en rotation autour d'un axe de rotation et comportant un dispositif de maintien (26) conformé pour permettre d'attacher une extrémité d'une frette,
**caractérisé en ce que** la bobine d'enroulement comportant en outre une encoche (28) s'étendant radialement par rapport à la bobine d'enroulement et la machine comprenant en outre un moteur électrique couplé à la bobine d'enroulement et susceptible d'entraîner la bobine d'enroulement en rotation autour de son axe lorsqu'il est alimenté électriquement,
le procédé comprend en outre les étapes suivantes :
- maintenir une extrémité libre de la frette de la bobine de frette, sur la bobine d'enroulement, au moyen du dispositif de maintien de la bobine d'enroulement ;
- alimenter électriquement le moteur électrique de la machine pour entraîner en rotation la bobine d'enroulement, de façon à enrouler la frette de la bobine de frette sur plusieurs tours autour de la bobine d'enroulement ;
- arrêter d'alimenter électriquement le moteur électrique de la machine ;
- au niveau de l'encoche de la bobine d'enroulement, couper lesdits plusieurs tours de frette enroulés sur la bobine d'enroulement.

2. Procédé selon la revendication 1, **caractérisé en ce qu'**il comporte l'étape suivante avant l'étape consistant à couper lesdits plusieurs tours de frette enroulés sur la bobine d'enroulement :
- au niveau de l'encoche de la bobine d'enroulement, mettre en place au moins un premier lien autour desdits plusieurs tours de frette enroulés sur la bobine d'enroulement.

3. Procédé selon la revendication 2, **caractérisé en ce qu'**il comporte en outre l'étape suivante avant l'étape consistant à couper lesdits plusieurs tours de frette enroulés sur la bobine d'enroulement :
- au niveau de l'encoche de la bobine d'enroulement, mettre en place au moins un deuxième lien, distant du premier lien, autour desdits plusieurs tours de frette enroulés sur la bobine d'enroulement,
et, lors de l'étape consistant à couper lesdits plusieurs tours de frette enroulés sur la bobine d'enroulement, couper lesdits plusieurs tours de frette entre le premier lien et le deuxième lien.

4. Machine (1) de fabrication de frettes comprenant :
- au moins un axe (12a) susceptible de recevoir une bobine de frette ; et
- une bobine d'enroulement (20) conformée pour être entraînée en rotation autour d'un axe de rotation et comportant un dispositif de maintien (26) conformé pour permettre d'attacher une extrémité d'une frette sur la bobine d'enroulement,
**caractérisée en ce que** la bobine d'enroulement comprend une encoche (28) s'étendant radialement par rapport à la bobine d'enroulement,
et **en ce que** la machine comprend un moteur électrique couplé à la bobine d'enroulement et susceptible d'entraîner la bobine d'enroulement en rotation autour de son axe lorsqu'il est alimenté électriquement, de façon à permettre d'enrouler la frette d'une bobine de frette sur plusieurs tours autour de la bobine d'enroulement lorsque la bobine de frette est mise en place sur l'axe susceptible de recevoir la bobine de frette et une extrémité libre de la frette de la bobine de frette est maintenue sur la bobine d'enroulement, au moyen du dispositif de maintien de la bobine d'enroulement,
l'encoche de la bobine d'enroulement étant conformée pour permettre le passage d'un outil de coupe pour couper lesdits plusieurs tours de frette enroulés sur la bobine d'enroulement.

5. Machine selon la revendication 4, **caractérisée en ce qu'**elle comporte en outre un deuxième axe (12b) susceptible de recevoir une deuxième bobine de frette.

6. Machine selon l'une des revendications 4 ou 5, **caractérisée en ce que** l'encoche de la bobine d'enroulement est conformée pour permettre la mise en place d'un premier lien et d'un deuxième lien, distant du premier lien, autour desdits plusieurs tours de frette enroulés sur la bobine d'enroulement.

## Patentansprüche

1. Verfahren zur Herstellung von Bandagen umfassend einen Schritt des Anbringens mindestens einer Bandagenspule auf einer Maschine (1) umfassend:
- mindestens eine Achse (12a, 12b) die eine Bandagenspule aufnehmen kann; und
- eine Aufwickelspule (20), die dazu ausgebildet ist, um eine Drehachse drehend angetrieben zu werden, und aufweisend eine Haltevorrichtung (26), die dazu ausgebildet ist, zu gestatten, ein Ende einer Bandage anzubringen,
**dadurch gekennzeichnet, dass**, die Aufwickelspule ferner aufweisend eine Rille (28), die sich radial bezogen auf die Aufwickelspule erstreckt, und die Maschine ferner umfassend einen Elektromotor, der mit der Aufwickelspule gekoppelt ist und die Aufwickelspule um ihre Achse drehend antreiben kann, wenn er mit Strom versorgt wird, das Verfahren ferner die folgenden Schritte umfasst:
- Halten eines freien Endes der Bandage der Bandagenspule auf der Aufwickelspule mittels der Haltevorrichtung der Aufwickelspule;
- Versorgen des Elektromotors der Maschine mit Strom, um die Aufwickelspule drehend anzutreiben, um die Bandage von der Bandagenspule um mehrere Windungen um die Aufwickelspule zu wickeln;
- Aufhören, den Elektromotor der Maschine mit Strom zu versorgen;
- Durchschneiden der mehreren Bandagenwindungen, die auf die Aufwickelspule gewickelt sind, an der Rille der Aufwickelspule.

2. Verfahren nach Anspruch 1, **dadurch gekennzeichnet, dass** es vor dem Schritt, der darin besteht, die mehreren Bandagenwindungen durchzuschneiden, die auf die Aufwickelspule gewickelt sind, den folgenden Schritt aufweist:
- Anbringen mindestens eines ersten Bands um die mehreren Bandagenwindungen, die auf die Aufwickelspule gewickelt sind, an der Rille der Aufwickelspule.

3. Verfahren nach Anspruch 2, **dadurch gekennzeichnet, dass** es vor dem Schritt, der darin besteht, die mehreren Bandagenwindungen durchzuschneiden, die auf die Aufwickelspule gewickelt sind, ferner den folgenden Schritt aufweist:
- Anbringen mindestens eines zweiten Bands, das von dem ersten Band entfernt ist, um die mehreren Bandagenwindungen, die auf die Aufwickelspule gewickelt sind, an der Rille der Aufwickelspule,
und, beim Schritt, der darin besteht, die mehreren Bandagenumdrehungen durchzuschneiden, die auf die Aufwickelspule gewickelt sind, Durchschneiden der mehreren Bandagenwindungen zwischen dem ersten Band und dem zweiten Band.

4. Maschine (1) zur Herstellung von Bandagen umfassend:
- mindestens eine Achse (12a), die eine Bandagenspule aufnehmen kann; und
- eine Aufwickelspule (20), die dazu ausgebildet ist, um eine Drehachse drehend angetrieben zu werden, und aufweisend eine Haltevorrichtung (26), die dazu ausgebildet ist, zu gestatten, ein Ende einer Bandage auf der Aufwickelspule anzubringen,
**dadurch gekennzeichnet, dass** die Aufwickelspule eine Rille (28) umfasst, die sich radial bezogen auf die Aufwickelspule erstreckt,
und dadurch, dass die Maschine einen Elektromotor umfasst, der mit der Aufwickelspule gekoppelt ist und die Aufwickelspule um ihre Achse drehend antreiben kann, wenn er mit Strom versorgt wird, um es zu gestatten, die Bandage einer Bandagenspule um mehrere Windungen um die Aufwickelspule zu wickeln, wenn die Bandagenspule auf der Achse angebracht ist, die die Bandagenspule aufnehmen kann, und ein freies Ende der Bandage der Bandagenspule auf der Aufwickelspule mittels der Haltevorrichtung der Aufwickelspule auf der Aufwickelspule gehalten wird, wobei die Rille der Aufwickelspule dazu ausgebildet ist, den Durchgang eines Schneidwerkzeugs zu gestatten, um die mehreren Bandagenwindungen durchzuschneiden, die auf die Aufwickelspule gewickelt sind.

5. Maschine nach Anspruch 4, **dadurch gekennzeichnet, dass** sie ferner eine zweite Achse (12b) aufweist, die eine zweite Bandagenspule aufnehmen kann.

6. Maschine nach einem der Ansprüche 4 oder 5, **dadurch gekennzeichnet, dass** die Rille der Aufwickelspule dazu ausgebildet ist, die Anbringung eines ersten Bands und eines zweiten Bands, das von dem ersten Band entfernt ist, um die mehreren Bandagenwindungen zu gestatten, die auf die Aufwickelspule gewickelt sind.

## Claims

1. Method for producing bindings comprising a step of positioning at least one binding bobbin on a machine (1) comprising:
- at least one shaft (12a, 12b) capable of receiving a binding bobbin; and
- a winding bobbin (20) which is configured to be driven in rotation about an axis of rotation and comprising a device for supporting (26) which is configured to permit one end of a binding to be attached,
**characterized in that** the winding bobbin further comprises a notch (28) extending radially relative to the winding bobbin and the machine further comprises an electric motor which is coupled to the winding bobbin and capable of driving the winding bobbin in rotation about its axis when it is supplied with electricity,
the method further comprises the following steps:
- supporting a free end of the binding of the binding bobbin on the winding bobbin, by means of the device for supporting the winding bobbin;
- supplying electricity to the electric motor of the machine to drive the winding bobbin in rotation, so as to wind the binding of the binding bobbin over a plurality of turns around the winding bobbin;
- stopping the supply of electricity to the electric motor of the machine;
- in the region of the notch of the winding bobbin, cutting said plurality of turns of bindings wound onto the winding bobbin.

2. Method according to Claim 1, **characterized in that** it comprises the following step, before the step consisting of cutting said plurality of turns of bindings wound onto the winding bobbin:
- in the region of the notch of the winding bobbin, positioning at least one first connector around said plurality of turns of bindings wound onto the winding bobbin.

3. Method according to Claim 2, **characterized in that** it further comprises the following step, before the step consisting of cutting said plurality of turns of bindings wound onto the winding bobbin:
- in the region of the notch of the winding bobbin, positioning at least one second connector, remote from the first connector, around said plurality of turns of bindings wound onto the winding bobbin,
and, during the step consisting of cutting said plurality of turns of bindings wound onto the winding bobbin, cutting said plurality of turns of bindings between the first connector and the second connector.

4. Machine (1) for producing bindings, comprising:
- at least one shaft (12a) capable of receiving a binding bobbin; and
- a winding bobbin (20) which is configured to be driven in rotation about an axis of rotation and comprising a device for supporting (26) which is configured to permit one end of a binding to be attached to the winding bobbin,
**characterized in that** the winding bobbin comprises a notch (28) extending radially relative to the winding bobbin,
and **in that** the machine comprises an electric motor coupled to the winding bobbin and capable of driving the winding bobbin in rotation about its axis when it is supplied with electricity, so as to permit the binding of a binding bobbin to be wound over a plurality of turns around the winding bobbin when the binding bobbin is positioned on the shaft which is capable of receiving the binding bobbin and a free end of the binding of the binding bobbin is supported on the winding bobbin by means of the device for supporting the winding bobbin, the notch of the winding bobbin being configured to permit the passage of a cutting tool to cut said plurality of turns of bindings wound onto the winding bobbin.

5. Machine according to Claim 4, **characterized in that** it further comprises a second shaft (12b) which is capable of receiving a second binding bobbin.

6. Machine according to either of Claims 4 and 5, **characterized in that** the notch of the winding bobbin is configured to permit the positioning of a first connector and a second connector, remote from the first connector, around said plurality of turns of bindings wound onto the winding bobbin.
